# EUROPÄISCHE PATENTSCHRIFT

(11) **EP 1 262 035 B1**
(45) Veröffentlichungstag und Bekanntmachung des Hinweises auf die Patenterteilung: **31.05.2006**
(21) Anmeldenummer: 01929218.4
(22) Anmeldetag: 23.02.2001
(51) Int. Cl.: H04L 5/14, H04L 1/00, H04L 12/24, H04L 12/56

(54) **VERFAHREN ZU ÜBERTRAGUNG VON DATEN IN NETZWERKEN ÜBER DATENLEITUNGEN**
METHOD FOR TRANSMITTING DATA IN NETWORKS VIA DATA LINES
PROCEDE DE TRANSMISSION DE DONNEES DANS DES RESEAUX

(30) Priorität: 23.02.2000 DE 10008377
(43) Veröffentlichungstag der Anmeldung: 04.12.2002
(73) Patentinhaber: Thinprint GmbH, 10559 Berlin (DE)
(72) Erfinder: MICKELEIT, Carsten, 12205 Berlin (DE)
(74) Vertreter: Schneider, Henry
(86) Internationale Anmeldenummer: PCT/DE2001/000709
(87) Internationale Veröffentlichungsnummer: WO 2001/063828

(56) Entgegenhaltungen:
- EP-A- 0 858 026
- WO-A-97/06619
- US-A- 5 544 228

## Beschreibung

Die Erfindung betrifft ein Verfahren zur Übertragung von Daten in Netzwerken über Datenleitungen.

Verfahren zur Komprimierung von Daten sind seit längerem bekannt und haben den Zweck, das zu verarbeitende Datenvolumen zu reduzieren, um weniger Speicherplatz zu benötigen oder eine schnellere Übertragung der Daten über Kommunikationsleitungen zu ermöglichen.

So sind aus dem Stand der Technik beispielsweise folgende Verfahren bekannt:

EP 0 933 876 beschreibt ein Verfahren zur Komprimierung von Daten und deren Übertragung in unzuverlässig arbeitenden Netzwerken dadurch, daß nach der ersten Kommunikation zweier Terminals miteinander, Terminal 2 einen definierten Algorithmus zur Komprimierung der Daten an Terminal 1 verschickt, dort die zu übertragenden Daten gemäß diesem Algorithmus komprimiert und danach an Terminal 2 zurückgesandt werden, wo die empfangenen Daten entsprechend dem anfangs verschickten Algorithmus entpackt werden.

US 5822524 offenbart ein Verfahren zur Übertragung von Multimediadaten, wie Videofilmen, in Netzwerken. Die Multimediadaten werden durch ein Benutzerterminal von einem Server abgerufen und in komprimierter und digitalisierter Form derart verschickt, daß der Buffer des Benutzerterminals, welcher normalerweise 1 bis 5 Videobilder speichern kann, immer gefüllt ist. Die Übertragung der Videodaten ist daher nicht an einen kontinuierlichen oder durchschnittlichen Datenfluß gebunden.

US 5564001 beschreibt ebenfalls ein Verfahren zur Übertragung von Multimediadaten in Netzwerken mit einer limitierten Bandbreite, wozu auch die Telekommunikationskabelnetzwerke zählen. Dabei werden die Multimediadaten mittels psychographischer Parameter in wichtige und weniger wichtige Multimediainformationen getrennt, welche danach wenigstens teilweise komprimiert werden. Nach der Übermittlung an den Benutzer werden die komprimierten Daten dekomprimiert und mit den in unkomprimierter Form übermittelten Daten vereint.

EP 0 852 445 offenbart ein Verfahren zur Optimierung der Bandbreite komprimierter Multimediadatenströme für die Übertragung in Netzwerken. Dabei werden die komprimierten Datenblöcke vor der Übertragung dergestalt markiert, daß der Markierung das in dem jeweiligen Datenblock enthaltene Datenvolumen, die zur Komprimierung bzw. Dekomprimierung erforderlichen Informationen sowie die Stelle, an welcher der jeweilige Datenblock in den gesamten Datenverbund einzufügen ist, enthalten sind. Zudem ermittelt ein Server vor der Übertragung die Minimumpufferkapazität des Empfängers sowie die Mindestanzahl an aufnehmbaren Datenblöcken des Puffers des Empfängers. Aus diesen Angaben zusammen mit der Übertragungszeit der komprimierten Datenblöcke läßt sich ein optimaler Fluß der komprimierten Datenblöcke zum Puffer des Empfängers berechnen, und die komprimierten Datenblöcke so mit einer Minimalrate übertragen, daß der Puffer des Empfängers gerade nicht leerläuft. Dieses Übertragungsverfahren garantiert die Übertragung der komprimierten Datenblöcke bei einer geeigneten Bandbreite, da die zur Verfügung stehende Bandbreite von der Pufferkapazität des Empfängers abhängt. Bei einem großem Puffer beim Empfänger, erhöht sich die zur Verfügung stehende Bandbreite, so daß eine schnellere Übertragung der komprimierten Datenblöcke erfolgt, um ein Leerlaufen des Puffers und somit kurzzeitig Standbilder zu vermeiden. Andererseits muß bei kleinem Puffer die Datenblockübertragung verringert werden, um eine Überlagerung der einzelnen Bilder zu verhindern.

Die bekannten Verfahren zur Übermittlung komprimierter Daten verringern zwar das zu übertragende Datenvolumen durch Komprimierung der zu übertragenden Daten, können jedoch nicht verhindern, daß der Versender und Empfänger der Daten während der Datenübertragung keinen Zugriff auf im Netzwerk zur Verfügung stehende Daten hat. Der Empfänger ist für die Zeit der Datenübertragung blockiert und nicht in der Lage mit anderen Endgeräten oder der Zentraleinheit des jeweiligen Netzwerkes zu kommunizieren.

Da jedoch die zu übertragenden Datenvolumen in Netzwerken immer größer werden, wenn beispielsweise umfangreiche Druckaufträge, hochaufgelöste Bilder oder Multimediadateninformationen übermittelt werden sollen, kann dieses Problem nicht ignoriert werden.

Daher ist es Aufgabe der vorliegenden Erfindung ein Verfahren zu entwickeln, bei dem während der Übertragung von umfangreichen Daten in einem Netzwerk eine ungehinderte Kommunikation des Versenders und/oder des Empfängers der Daten innerhalb des Netzwerks gewährleistet bleibt.

Diese Aufgabe wird durch die Merkmale des Anspruchs 1 gelöst.

Durch die Unterteilung der Bandbreite in Bereiche wird jedoch keine Festlegung hinsichtlich der Kommunikationsrichtung getroffen, so daß in beliebiger Richtung bzw. bidirektional Daten übertragen werden können.

Vorzugsweise werden zudem die Daten vor der Übertragung komprimiert, um bei Bedarf eine noch größere Datenmenge bewältigen zu können. Die Komprimierung der Daten erfolgt mittels bekannter Algorithmen. Die Effizienz der Komprimierung mittels der Algorithmen nimmt mit der Größe der zu komprimierenden Datei zu.

Multimediadaten und Druckdaten werden üblicherweise als konstanter Strom relativ kleiner Pakte über die entsprechende Datenleitung versendet. Bei dem erfindungsgemäßen Verfahren werden relativ große Datenpakete verwendet, die dann zudem optimal komprimiert werden können. Die Schnelligkeit der Datenübertragung wird daher zusätzlich verbessert.

Verfahrensgemäß erfolgt die Kommunikation mit dem Endgerät unter Verwendung des Puffers des Endgerätes, wobei das Senden der Daten in auf den Puffer des Endgeräts abgestimmten Paketen erfolgt. Der Sendevorgang wird unterbrochen, wenn der Puffer des Endgerätes voll ist. Der Vorgang setzt wieder ein, sobald der Puffer wieder aufnahmefähig ist.

Nach einer Ausführungsform des erfindungsgemäßen Verfahrens ist es vorgesehen, daß die zur Komprimierung verwendeten Algorithmen, auf die zu komprimierende Datenart besonders abgestimmt sind. So ist es möglich, Algorithmen zu verwenden, die bei einer Ausgabe der Daten auf einem Drucker, der hierbei direkt oder indirekt den Empfänger der Daten darstellt, die auf die entsprechende Druckersprache z. B. Postscript, PCL oder RAW abgestimmt sind.

Durch speziell auf die zu komprimierende Datenart abgestimmte Algorithmen lassen sich zudem überflüssige Daten herausfiltern, wie beispielsweise bei Multimediadaten unter Tolerierung akzeptierbarer Qualitätsverluste, wodurch die zu komprimierende Datenmenge zusätzlich verkleinert wird.

Weiterhin besteht die Möglichkeit, sich wiederholende Datensequenzen nur einmal in komprimierter Form zum Empfänger zu übertragen und dort abzulegen, so daß eine mehrmalige Übertragung identischer Datensequenzen entfällt. Dies führt zu einer weiteren Steigerung der Übertragungsrate komprimierter Daten. Dies kann derart erfolgen, daß statt der bereits einmal gesendeten Datensequenz ein spezifischer Code übertragen wird, der beim Empfänger bewirkt, daß die entsprechende Datensequenz eingefügt wird.

Für die Übertragung der komprimierten Daten eignen sich beliebige Netzwerke. Darunter fallen Festnetzwerke, aus Festnetzwerken und Mobilfunknetzwerken kombinierte Netzwerke oder ausschließlich Mobilfunknetzwerke. Für einen optimalen Einsatz des erfindungsgemäßen Verfahrens sollten die Netzwerke eine Mindestbandbreite von 9,6 kbit/s aufweisen. Das erfindungsgemäße Verfahren ist jedoch auch bei Netzwerken einsetzbar, welche diese Anforderung von 9,6 kbit/s nicht erfüllen.

Vorzugsweise findet das erfindungsgemäße Verfahren Anwendung bei Firmen, die ihre Filialen über externe Netzwerke wie z.B. das Internet anbinden bzw. bei Verwendung von Mobilfunkverbindungen.

Bei derartigen Netzwerken erfolgt die Dateneingabe, z.B. Buchungen, in den Filialen selber, wobei auf einen Zentralrechner zurückgegriffen wird. Der Ausdruck der Buchungsbelege erfolgt wiederum in der jeweiligen Filiale. Da die Daten dazu vom Zentralrechner über eine Datenleitung zur Filiale geleitet werden, ist nach dem bisherigen Stand der Technik die Datenleitung über geraume Zeit mit dem Druckauftrag belegt, so daß weitere Buchungseingaben nicht mehr möglich oder zumindest erschwert sind. Nach dem Erfindungsgemäßen Verfahren können nunmehr die Buchungsvorgänge während der Ausgabe der Druckdaten bearbeitet werden. Das Versenden der Druckdaten erfolgt auf Befehl des Nutzers in der Filiale durch den Zentralrechner, wobei die Bandbreitenfestlegung ebenfalls nur indirekt über den Zentralrechner als Versender erfolgt, da der Nutzer des Computers in der Filiale, d.h. der Empfängers der Druckdaten dazu den Befehl eingibt. Für diesen Nutzer ist es üblicherweise unerheblich, ob er gerade auf seinen Computer oder den Zentralrechner Zugriff nimmt, so daß für einen Druckauftrag lediglich der Befehl "Drucken" gegeben wird, wobei je nach dem wo die Daten abgelegt sind, der Computer oder der Zentralrechner die Daten an den jeweiligen Drucker weiterleitet. Bei dem erfindungsgemäßen Verfahren erfolgt die Druckausgabe über einen virtuellen Druckerport, den der Nutzer gezielt ansteuern kann.

Empfänger und Versender sind dabei üblicherweise die Computer in der Bankfilialen bzw. der Zentralrechner, wobei als Empfänger und Versender auch andere geeignete Datenverarbeitungsgeräte verwendet werden können.

Die Festlegung der Bandbreite für die Übermittlung der komprimierten Daten kann manuell oder automatisch, einmalig oder kontinuierlich und absolut oder in Relation zu der insgesamt zur Verfügung stehenden Bandbreite oder in Relation zu der für die Übertragung der komprimierten Daten benötigten Bandbreite erfolgen.

Bei der Anbindung von Filialen oder Niederlassungen an einen Zentralrechner steht in der Regel eine Bandbreite von 64 kbit/s zur Verfügung. So kann man beispielsweise manuell die Bandbreite für die Übertragung der komprimierten Daten von der Zentraleinheit zum Endgerät auf 32 kbit/s festlegen, so daß für den Datenstrom von dem Endgerät zur Zentraleinheit ebenfalls noch 32 kbit/s zur Verfügung stehen.

Ist die maximale Bandbreite des Netzwerks nicht bekannt, so kann manuell in Relation zur Maximalbandbreite beispielsweise 50% der zur Verfügung stehenden Bandbreite für die Übertragung der komprimierten Daten reserviert werden.

Überwiegt der Datenstrom von der Zentraleinheit zum Endgerät bei weitem den entgegenlaufenden Datenstrom vom Endgerät zur Zentraleinheit, so kann in Relation zur zu übertragenden Datenmenge die Bandbreitenfestlegung erfolgen. Beispielsweise werden 75% der Maximalbandbreite für den Datenfluß Zentraleinheit in Richtung Endgerät und nur 25% für den Datenfluß vom Endgerät in Richtung Zentraleinheit reserviert.

Weil eine manuelle Einstellung die Kenntnis der maximalen Bandbreite oder der Menge an zu übertragenden Daten voraussetzt, ist es vorteilhaft, diese Einstellungen softwaregesteuert und somit automatisch vorzunehmen.

Eine weitere Optimierung des erfindungsgemäßen Verfahrens besteht darin, daß die Einstellung der Bandbreite nicht einmalig erfolgt sondern softwaregesteuert in bestimmten Zeitabständen überprüft oder vor jedem Versenden größerer Datenmengen neu berechnet und dementsprechend festgelegt wird.

Nach der Übermittlung der komprimierten Daten vom Versender zum Empfänger erfolgt dort die Dekomprimierung der Daten mittels des für die Komprimierung verwendeten Algorithmus, falls die Daten nicht in komprimierter Form gespeichert werden sollen.

Soll die Ausgabe von Daten direkt auf einem Drucker ohne Zwischenschaltung eines Computers erfolgen, kann die Dekomprimierung der Druckdaten durch den Drucker selber vorgenommen werden, die üblicherweise über eine ausreichende Speicherkapazität verfügen, um entsprechende Software zu speichern, oder durch eine Printbox, die die Dekomprimierung vornimmt und anschließend die Daten an den Drucker weiterleitet.

Heutzutage ist es üblich, daß vor dem langwierigen Ausdruck von Texten, Graphiken o.dgl. sich der Benutzer eine Seitenansicht auf dem Rechner anschaut. Im Rahmen einer Netzarchitektur, bei der die Anwendung auf einem entfernten Server ausgeführt wird, ist dies nicht sinnvoll, da die Übertragung des Seitenbildes ähnlich langwierig ist wie die endgültige Ausgabe auf dem Drucker. Dem Benutzer entsteht daher diese Wartezeit zweimal. Gemäß dem erfindungsgemäßen Verfahren ist es daher vorgesehen, daß die Seitenansicht als Druckstrom zum Endbenutzer übertragen und dort graphisch ausgegeben wird, wobei die Daten des Druckstroms bei Bedarf zusätzlich zum Ausdruck der entsprechenden Seite verwendet werden, so daß die zweite Übertragung der Daten entfällt.

Bei den zu übertragenden Daten handelt es sich vorzugsweise um Multimediadaten oder Druckdaten. Das erfindungsgemäße Verfahren eignet sich besonders für die Übertragung enormer Datenmengen. Computerspiele und vor allem netzwerktaugliche Computerspiele, welche mit einer beliebigen Anzahl von Teilnehmern durchgeführt werden können, Musik, Videofilme, Bücher, Karteien oder dreidimensionale Abbildungen stellen diese enormen Datenmengen dar, deren Übertragung durch das erfindungsgemäße Verfahren bewältigt werden soll.

Das erfindungsgemäße Verfahren ermöglicht die Übertragung beliebig großer Datenmengen durch geeignete Komprimierung des Datenvolumens und Festlegung einer bestimmten Bandbreite für die Übertragung, so daß der parallele Zugriff auf das Netzwerk während der Datenübertragung ungehindert erfolgen kann.

Somit ist eine ungehinderte Kommunikation mit anderen Endgeräten während der Datenübertragung von der Zentraleinheit möglich. Es können während der Übertragung der komprimierten Daten zu einem Empfänger von diesem Daten in das Netz eingegeben werden.

Es lassen sich beliebig große Datenmengen beispielsweise von einem Internetserver abrufen und bei dem jeweiligen Endgerät magnetisch oder digital speichern, während beispielsweise das "Surfen" im Internet unbeeinträchtigt fortgeführt werden kann.

Beim Anfordern von Daten von einem Internetserver kann zum einen die Verbindung nach dem Erhalt und vor der nächsten Anfrage abgebaut werden. Andererseits ist es möglich, daß der Benutzer den Internetserver ansprechen kann, ohne daß er die eigene Adresse angeben muß (Maskerading), was aus Sicherheitsgründen von großem Interesse ist und deshalb sehr häufig angewendet wird. Der Internetserver ist dann darauf angewiesen, daß der Benutzer Informationen abholt. Bei der Druckausgabe muß der Internetserver den Druckstrom nach fertiger Aufbereitung zum Endgerät senden, welches er im allgemeinen nicht adressieren kann. Entweder hält Benutzer eine ständige Verbindung zum Internetserver offen, was zu höheren Kommunikationskosten und Bandbreitenverbrauch führt, oder der Benutzer muß ständig nachfragen, ob ein Druckjob vorhanden ist, was zu entsprechenden Nachteilen führt. Das Verfahren sieht daher vorteilhafterweise vor, daß im Rahmen von Internetanwendungen eine Druckschaltfläche zur Verfügung gestellt wird, die automatisch zeitgleich die Druckausgabe auf dem Internetserver startet und das Endgerät veranlaßt, eine Verbindung zum Internetserver aufzubauen.

Das erfindungsgemäße Verfahren bietet die auch die Möglichkeit, Druckaufträge im Rahmen des sog. Webprintings abzuwickeln. Dazu werden die Druckaufträge vom Endgerät zu einer URL gesandt, die verfahrensgemäß um zwei Bestandteile erweitert wird, um die Form der Druckausgabe und die Zieladresse anzugeben. So kann angeben werden, ob der Druckauftrag als Fax, SMS, Email o.dgl. und an welche Telefonnummer versandt werden soll. In diesem Fall ist es dem unter der URL befindlichen Rechner möglich Daten zu versenden und die Druckdaten zu empfangen und diese bestimmungsgemäß weiterzuleiten.

Ebenso kann das erfindungsgemäße Verfahren als Kommunikationsgateway für Printserver dienen. Im allgemeinen wird die Aufbereitung von Druckaufträgen in Netzwerken aus Gründen der einfacheren Verwaltung auf dezidierte Druckserver ausgelagert. Das Endgerät muß also sowohl zum Anwendungszentralrechner wie auch zum Druckzentralrechner eine Verbindung haben. Im Internet ist es aber aus Sicherheitsgründen sinnvoll, lediglich eine geschützte Verbindung aufzubauen. Das Verfahren sieht deshalb vor, daß auf dem Anwendungszentralrechner ein Gateway installiert wird, welches die Kommunikation zu dem Druckzentralrechner so umlenkt, daß es für den Endbenutzer erscheint als wenn der Druckstrom direkt vom Anwendungszentralrechner kommt. Der Endbenutzer muß deshalb auch nur noch eine Verbindung zum Zentralrechner aufbauen.

Nach einer Ausführungsform des erfindungsgemäßen Verfahrens werden die übertragenen Daten derart einem Nutzer bzw. Endgerät zugeordnet, daß Verbrauchdaten hinsichtlich der Anzahl von ausgedruckten Seiten, Bandbreitenreservierung, Bandbreitenverbrauch und Datenvolumen sowie erspartes Datenvolumen erfaßt werden können, die für Abrechnungszwecke und zur Limitierung der Druckausgabe nach dem Stand des jeweiligen Nutzerkontos verwendet werden können.

Weitere vorteilhafte Ausgestaltungen sind in den Unteransprüchen gekennzeichnet.

Nachstehend wird das erfindungsgemäße Verfahren beispielhaft anhand eines Schaubildes verdeutlicht.

Das Schaubild zeigt ein Netzwerk, das aus einer Zentraleinheit Z und einer beliebigen Anzahl von Endgeräten E₁ bis Eₙ besteht. Die Endgeräte E₁ bis Eₙ sind mit weiteren Ausgabe- oder Speichereinheiten und einer Eingabeeinheit, die nur für das Endgerät E1 dargestellt sind, verbunden. So ist E₁ mit einer Speichereinheit S, einer Eingabeeinheit T und zwei Ausgabeeinheiten, einem Drucker D und einem Monitor M verbunden. Die einzelnen Linien stellen die Datenleitungen zwischen den Endgeräten und der Zentraleinheit dar.

Von dem Endgerät E₁ wird über das Netzwerk die Zentraleinheit Z angesteuert, auf der beispielsweise eine Datenbank mit Musikaufnahmen abgelegt ist. Von dem Benutzer des Endgerätes E₁ werden etliche Musikstücke auf der Zentraleinheit Z ausgewählt und abgerufen. Nun werden auf der Zentraleinheit Z die Multimediadaten mittels eines speziell auf diese Datenart abgestimmten Algorithmus komprimiert und eine der zu übertragenden Datenmenge angemessene Bandbreite wird festgelegt. Nun erfolgt die Übermittlung der komprimierten Daten, während der Benutzer am Endgerät E₁ dadurch nicht beeinflußt wird. Er kann weiterhin problemlos im Netzwerk aktiv sein und selber Daten in dieses eingeben, da der Datenstrom von dem Endgerät E₁ zur Zentraleinheit Z nicht durch den entgegenlaufenden Datenstrom gestört wird. Die an das Endgerät E₁ übertragenen Daten sollen dort auf CD gebrannt werden. Dazu erfolgt im Endgerät E₁ die Dekomprimierung der Daten und die Weiterleitung an die Speichereinheit S, welche in dem beschriebenen Beispiel ein CD-Brenner ist.

Eine andere Ausführungsform könnte wie folgt aussehen. Z ist ein Server eines firmeninternen Netzwerkes einer dezentral agierenden Firma, auf dem die gesamte Kundenkartei, sämtliche produzierten Waren, Liefermengen, Lieferzeiten, Preise usw. gespeichert sind. E₁ ist ein Computer einer Zweigstelle. Von dort könnten nun sämtliche Daten bezüglich einer bestimmten Ware abgerufen werden, welche in komprimierter Form vom Server Z zum Endgerät E₁ übertragen würden, während der entgegengesetzte Datenfluß weiterhin aufrechterhalten bleibt. Während der Übertragung der komprimierten Daten vom Server Z zum Endgerät E₁ können weiterhin beispielsweise Bestellungen vom Endgerät E₁ im Ausland an den Server Z zur zentralen Bearbeitung geschickt werden. Die übertragenen komprimierten Daten werden von E₁ direkt an einen Drucker weitergeleitet, welcher mittels einer Software, die speziell auf die verwendete Druckersprache angepaßt wurde, die erhaltenen Druckdaten dekomprimiert und ausdruckt. Zudem können die übertragenen Daten von E₁ an eine Speichereinheit S weitergeleitet, wo sie in komprimierter Weise bis zur nächsten Aktualisierung abgelegt werden.

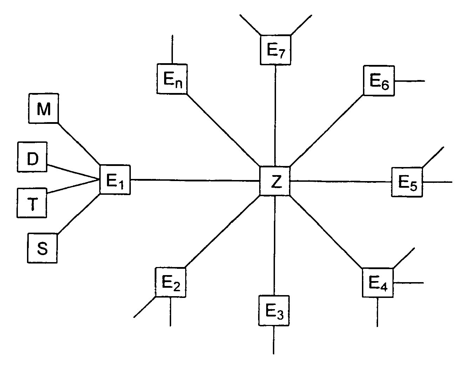

## Patentansprüche

1. Verfahren zur Übertragung von Daten in Netzwerken,
**dadurch gekennzeichnet, dass**
die an der Anbindung eines Endgerätes zur Datenübertragung verfügbare Bandbreite vor und/oder während der Übertragung der Daten in zumindest zwei Bandbreitenbereiche unterteilt wird,
wobei die Unterteilung der Bandbreite manuell durch einen die Datenübertragung steuernden Nutzer vorgenommen wird,
mindestens ein Bandbreitenbereich den zu übertragenden Daten zugeteilt wird und die übrige Bandbreite dem Nutzer für die parallele Übertragung anderer Daten zur Verfügung stehen.

2. Verfahren nach Anspruch 1, **dadurch gekennzeichnet, daß** die zu übertragenden Daten vor dem Übertragen von einem Versender komprimiert und anschließend über den vorgesehenen Bandbreitenbereich versendet werden, und
daß die übertragenen Daten von einem Empfänger dekomprimiert werden.

3. Verfahren nach Anspruch 1 oder 2, **dadurch gekennzeichnet, daß** ein Befehl zum Versenden der Daten vom Empfänger an den Versender gegeben wird.

4. Verfahren nach Anspruch 3, **dadurch gekennzeichnet, daß** beim Empfänger der Befehl zum Versenden der Daten durch Ansteuern eines virtuellen Ports ausgegeben wird.

5. Verfahren nach Anspruch 1 bis 4, **dadurch gekennzeichnet, daß** die Festlegung der Bandbreite einmalig vor der Übersendung von Daten erfolgt und/oder daß die Festlegung der Bandbreite einmalig vor jeder neuen Übersendung von Daten erfolgt.

6. Verfahren nach Anspruch 1 bis 5, **dadurch gekennzeichnet, daß** die Festlegung der Bandbreite kontinuierlich während der Übertragung erfolgt bzw. angepaßt wird.

7. Verfahren nach einem der Ansprüche 2 bis 6, **dadurch gekennzeichnet, daß** die zu übertragenden Daten durch einen Algorithmus komprimiert werden, welcher für die jeweilige Datenart besonders geeignet ist, überflüssige Daten herauszufiltern und/oder eine optimale Komprimierung zu bewirken.

8. Verfahren nach Anspruch 7, **dadurch gekennzeichnet, daß** sich wiederholende Datensequenzen der zu komprimierenden Daten nur jeweils einmal in komprimierten Form an den jeweiligen Empfänger übermittelt und dort gespeichert werden, so daß ein mehrmaliges Übermitteln identischer Datensequenzen enträllt.

9. Verfahren nach einem der Ansprüche 2 bis 8, **dadurch gekennzeichnet, daß** die komprimierten Daten in einem Datenstrom aus Paketen übermittelt werden, die einen größtmöglichen Umfang aufweisen.

10. Verfahren nach einem der Ansprüche 2 bis 9, **dadurch gekennzeichnet, daß** die Datenpakete bei der Versendung an ein Endgerät mit einem Puffer auf die Größe des Puffers abgestimmt sind und daß der Sendevorgang bei gefüllten Puffer unterbrochen und bei aufnahmefähigem Puffer fortgesetzt wird.

11. Verfahren nach einem der Ansprüche 1 bis 10, **dadurch gekennzeichnet, daß** die übertragenen Daten derart einem Nutzer bzw. Endgerät zugeordnet werden, daß Verbrauchdaten hinsichtlich der Anzahl von ausgedruckten Seiten, Bandbreitenreservierung, Bandbreitenverbrauch und Datenvolumen sowie erspartes Datenvolumen erfaßt werden und für Abrechnungszwecke sowie zur Limitierung der Druckausgabe nach dem Stand des jeweiligen Nutzerkontos verwendet werden.

12. Verfahren nach einem der Ansprüche 1 bis 11, **dadurch gekennzeichnet, daß** bei der Verwendung von Druckzentralrechnem beim Anwendungszentralrechner als Versender ein Gateway installiert wird, welches die Kommunikation des Empfängers zu einem Druckzentralrechner umlenkt.

13. Verfahren nach einem der Ansprüche 1 bis 12, **dadurch gekennzeichnet, daß** bei der Übertragung von Seitenansichten an den Empfänger die Seitenansicht als Druckstrom übertragen und dort graphisch ausgegeben wird, wobei die Daten des Druckstroms zusätzlich zum Ausdruck der entsprechenden Seite verwendet wird.

14. Verfahren nach einem der Ansprüche 1 bis 13, **dadurch gekennzeichnet, daß** beim Empfänger eine Druckschaltfläche zur Verfügung gestellt wird, die automatisch zeitgleich die Druckausgabe auf dem Versender startet und den Aufbau einer Verbindung zum Versender aufbaut.

## Claims

1. Method for transmitting data in networks
**characterized in that** a bandwidth available at the connection to a terminal unit to an end device for data transmission is subdivided into at least two portions before and/or during the transmission of data,
whereby the subdivision of the bandwidth is manually carried out by a user controlling the data transmission,
at least one bandwidth portion is allocated to the data to be transmitted and the remaining bandwidth is provided to the user for the parallel transmission of different data.

2. Method according Claim 1, **characterized in that** data to be transmitted is compressed before transmission by a sender and subsequently sent over the designated portion of bandwidth, and that the transmitted data is decompressed by a recipient.

3. Method according one of the Claims 1 or 2, **characterized in that** a command to transmit data is given by recipient to sender.

4. Method according Claim 3, **characterized in that** the command to transmit data is given from recipient by piloting a virtual port.

5. Method according one of the Claims 1 to 4, **characterized in that** bandwidth for data transmission is predefined once before data is transmitted and/or that the bandwidth is predefined once before each new data transmission.

6. Method according one of the Claims 1 to 5, **characterized in that** bandwidth is defined continuously or adjusted during transmission.

7. Method according one of the Claims 2 to 6, **characterized in that** data to be transmitted is compressed with an algorithm which is specifically appropriate to each type of data, to filter out superfluous data and/or effect optimal compression.

8. Method according Claim 7, **characterized in that** repetitive data sequences in the data to be compressed are only sent once in compressed form to the recipient and are saved there so that multiple transmission of identical data sequences is unnecessary.

9. Method according one of the Claims 2 to 8, **characterized in that** the compressed data is sent in a stream of data packets with the largest volume possible.

10. Method according one of the Claims 2 to 9, **characterized in that** data packets sent to an end device with a buffer are calibrated to the size of the buffer, and that the transmission is interrupted should the buffer become full and resumes once the buffer is again receptive.

11. Method according one of the Claims 1 to 10, **characterized in that** transmitted data is so assigned to a user/end device that data consumption concerning the number of printed pages, bandwidth reservation, bandwidth usage, data volume, and saved data volume can be registered and used for billing purposes and for limitation of printouts according to the status of each user account.

12. Method according one of the Claims 1 to 11, **characterized in that** when a dedicated print server is run with application hosts as sender, a gateway can be installed to reroute recipient's communication to a dedicated print server.

13. Method according one of the Claims 1 to 12, **characterized in that** when page previews are sent to recipient, the page preview is transmitted as print stream and there displayed, whereby the print stream's data can also be used for printout of the relevant page.

14. Method according one of the Claims 1 to 13, **characterized in that** a print button is made available to the recipient which automatically simultaneously starts printout at the sender and establishes as connection to the sender.

## Revendications

1. Procédé de transmission de données dans des réseaux, **caractérisé en ce qu'**on subdivise la largeur de bande passante disponible à l'entrée d'un appareil terminal de transmission de données avant et/ou pendant la transmission des données en au moins deux plages de largeurs de bande passante, moyennant quoi la subdivision de la largeur de bande est opérée manuellement par un utilisateur commandant la transmission des données, on affecte au moins une plage de largeur de bande passante aux données à transmettre et la largeur de bande passante restante est disponible pour l'utilisateur pour la transmission parallèle d'autres données.

2. Procédé selon la revendication 1, **caractérisé en ce que** les données à transmettre sont comprimées avant la transmission par un expéditeur et sont envoyées ensuite via la plage de largeur de bande passante prévue, et **en ce que** les données transmises sont décomprimées par un destinataire.

3. Procédé selon la revendication 1 ou 2, **caractérisé en ce qu'**une instruction d'envoi des données est donnée par le destinataire à l'expéditeur.

4. Procédé selon la revendication 3, **caractérisé en ce que**, chez le destinataire, l'instruction d'envoi de données est délivrée par l'activation d'un port virtuel.

5. Procédé selon la revendication 1 à 4, **caractérisé en ce que** la détermination de la largeur de bande passante s'effectue de manière unique avant la transmission des données et/ou que la détermination de la largeur de bande s'effectue de manière unique avant chaque nouvelle transmission de données.

6. Procédé selon la revendication 1 à 5, **caractérisé en ce que** la détermination de la largeur de bande passante s'effectue ou s'ajuste continuellement pendant la transmission.

7. Procédé selon l'une des revendications 2 à 6, **caractérisé en ce que** les données à transmettre sont comprimées par un algorithme, qui est approprié, selon le type de données respectif, pour filtrer les données superflues et/ou produire une compression optimale.

8. Procédé selon la revendication 7, **caractérisé en ce que** les séquences de données se répétant au sein des données à comprimer ne sont transmises respectivement qu'une seule fois sous une forme comprimée au destinataire respectif et sont enregistrées, de telle sorte à une transmission réitérée de séquences de données identiques est inutile.

9. Procédé selon l'une des revendications 2 à 8, **caractérisé en ce que** les données comprimées sont transmises en un flux de données constitué de paquets, qui ont une taille la plus grande possible.

10. Procédé selon l'une des revendications 2 à 9, **caractérisé en ce que** les paquets de données, lors de l'envoi à un appareil terminal pourvu d'une mémoire tampon, sont accordées à la taille de la mémoire tampon, et que le processus d'envoi est interrompu si la mémoire tampon est remplie et qu'il se poursuit dès que la mémoire tampon redevient apte à la réception.

11. Procédé selon l'une des revendications 1 à 10, **caractérisé en ce que** les données transmises sont affectées à un utilisateur ou à un appareil terminal de telle sorte que les consommations sont enregistrées en ce qui concerne le nombre de pages imprimées, la réservation de largeur de bande passante, la consommation de largeur de bande passante et le volume de données ainsi que le volume de données épargné et sont utilisées dans un but de facturation ainsi que pour limiter l'édition imprimée selon l'état de chaque compte utilisateur.

12. Procédé selon l'une des revendications 1 à 11, **caractérisé en ce qu'**en cas d'utilisation d'ordinateurs centraux d'impressions, on installe en tant qu'expéditeur une passerelle dans l'ordinateur central d'application, qui renvoie la communication du destinataire vers un ordinateur central d'impression.

13. Procédé selon l'une des revendications 1 à 12, **caractérisé en ce que**, dans le cas de transmission de pré-visualisations au destinataire, la pré-visualisation est transmise sous forme d'un flux d'impression et est éditée sur place sous forme graphique, moyennant quoi les données du flux d'impression sont utilisées en plus pour imprimer la page correspondante.

14. Procédé selon l'une des revendications 1 à 13, **caractérisé en ce que**, chez le destinataire, on met à disposition un bouton de commande d'impression qui démarre automatiquement l'édition d'impression auprès de l'expéditeur et instaure l'établissement d'une liaison avec l'expéditeur.
